Europäisches Patentamt

(19) European Patent Office

Office européen des brevets

(11) **EP 0 692 306 B1**

(12) **FASCICULE DE BREVET EUROPEEN**

(45) Date de publication et mention
de la délivrance du brevet:
**30.01.2002 Bulletin 2002/05**

(51) Int Cl.[7]: **B01J 23/04**, B01J 21/04,
C01B 17/04, B01D 53/48

(21) Numéro de dépôt: **95401672.1**

(22) Date de dépôt: **12.07.1995**

(54) **Catalyseurs pour le traitement de gaz contenant des composés soufrés, utilisation et procédé de traitement d'un gaz contenant des composés soufrés**

Katalysator zur Behandlung von schwefelenhaltenden Gasen, Verwendung und Behandlungsverfahren Schwefelverbindungen enthaltender Gase

Catalyst for the treatment of sulfur containing gases, use and treatment process of a gas containing sulfur compounds

(84) Etats contractants désignés:
**AT BE CH DE DK ES FR GB GR IE IT LI LU MC NL PT SE**

(30) Priorité: **13.07.1994 FR 9408746**

(43) Date de publication de la demande:
**17.01.1996 Bulletin 1996/03**

(73) Titulaire: **INSTITUT FRANCAIS DU PETROLE 92852 Rueil-Malmaison Cedex (FR)**

(72) Inventeurs:
• **Nedez, Christophe
  F-92600 Asnieres sur Seine (FR)**
• **Legendre, Olivier
  F-95220 Herblay (FR)**

(56) Documents cités:
**GB-A- 2 080 273        US-A- 4 243 556
US-A- 4 252 635**

**Description**

La présente invention concerne des catalyseurs pour le traitement de gaz, notamment des effluents gazeux industriels, contenant des composés soufrés, en vue de la production de soufre élémentaire. Elle concerne plus particulièrement des catalyseurs pour la réaction d'hydrolyse des composés organiques du soufre.

Dans le procédé Claus classique, la récupération du soufre à partir de gaz renfermant de l'hydrogène sulfuré et éventuellement des dérivés organiques du soufre comporte deux étapes.

Dans une première étape, on brûle l'hydrogène sulfuré en présence d'une quantité d'air contrôlée pour transformer une partie de l'hydrogène sulfuré en anhydride sulfureux selon la réaction (1) suivante :

$$H_2S + 3/2O_2 \rightarrow H_2O + SO_2 \qquad (1)$$

puis, dans une deuxième étape, on fait passer le mélange gazeux obtenu dans des convertisseurs en série renfermant un lit de catalyseur sur lequel a lieu la reaction de Claus (2) proprement dite :

$$2H_2S + SO_2 \rightarrow 3/x \, S_x + 2 \, H_2O \qquad (2)$$

Le bilan global de la réaction est donc (3) :

$$3 \, H_2S + 3/2 \, O_2 \rightarrow 3/x \, S_x + 3 \, H_2O \qquad (3)$$

Par ailleurs, outre l'hydrogène sulfuré, les gaz peuvent contenir des composés organiques du soufre tels que $CS_2$ et COS qui sont généralement stables au niveau des convertisseurs catalytiques et qui contribuent à accroitre de 20 à 50 % les émissions de $SO_2$ et de composés sulfurés dans l'atmosphère après incinération des fumées. Ces composés très gênants sont soit déjà contenus dans le gaz à traiter, soit formés au cours de la première étape d'oxydation conduite à température élevée.

Ces composés peuvent être éliminés par plusieurs types de réaction en particulier par hydrolyse selon les réactions :

$$CS_2 + 2 \, H_2O \rightarrow CO_2 + 2 \, H_2S \qquad (4)$$

$$CS_2 + H_2O \rightarrow COS + H_2S \qquad (5)$$

$$COS + H_2O \rightarrow CO_2 + H_2S \qquad (6)$$

ceci pour limiter en queue d'usine à soufre, les rejets d'effluents toxiques.

Ces réactions s'effectuent également sur un lit catalytique, avantageusement avec un catalyseur à base de titane, d'oxyde de cérium ou d'oxyde de zirconium ou d'alumine.

Elles interviennent généralement simultanément à la réaction de Claus (2) dans les convertisseurs.

A cet effet, les catalyseurs employés doivent présenter les meilleures activités possibles, mais également la meilleure résistance aux contraintes d'utilisation, en fonction du temps.

L'alumine est couramment employée dans le cadre de ces applications, comme catalyseur. Une de ses principales causes de désactivation est due à la formation de sulfates, à sa surface, qui réduisent ses performances catalytiques de manière souvent drastique.

Les travaux des inventeurs ont permis de mettre en evidence l'importance déterminante du taux de sodium de l'alumine en tant que facteur de désactivation, notamment par sulfatation.

Conformément à la présente invention, le catalyseur du type décrit ci-dessus est caractérisé par une teneur en sodium de l'alumine choisie dans une gamme déterminée.

La sélection de la plage de concentration en $Na_2O$ selon l'invention était totalement inattendue dans la mesure où l'état de la technique enseignait des taux de sodium aussi faibles que possible en raison de l'effet néfaste de $Na_2O$ sur l'alumine au cours d'une réaction de Claus.

Par ailleurs, le brevet US-A-4 243 556 décrit un procédé pour éliminer les oxydes de soufre d'un effluent de craquage catalytique, au niveau du régénérateur, ledit effluent étant mis en contact avec les particules de catalyseur de craquage contenant de la silice et des particules de solide contenant de l'aluminium destinées à réagir avec les oxydes de soufre, les pertes d'activité de l'alumine vis-à-vis de la réaction avec les oxydes de soufre, résultant de la migration de la silice des particules de catalyseur de craquage vers les particules contenant de l'alumine, étaient réduites par la mise en jeu de particules d'alumine contenant notamment du sodium.

L'invention a ainsi pour objet un procédé de traitement de gaz contenant des composés organiques du soufre utilisant un catalyseur qui comprend de 60 à 100% en poids d'alumine catalytiquement active contenant du sodium, caractérisé en ce que la teneur en sodium de l'alumine est choisie dans la plage comprise entre 1200 ppm et 2700 ppm de $Na_2O$ en poids, tel que defini dans le libellé de la revendication indépendante.

La teneur en sodium de l'alumine du catalyseur selon l'invention peut être avantageusement comprise entre 1500 ppm et 2500 ppm et encore plus avantageusement comprise entre 1700 et 2200 ppm.

Le catalyseur utilisé selon l'invention peut également comprendre, en proportion moindre par rapport à l'alumine, d'autres oxydes tels que l'oxyde de titane, la silice, l'oxyde de zirconium, l'oxyde de cérium, l'oxyde d'étain, les oxydes de terres rares trivalents, l'oxyde de molybdène, l'oxyde de cobalt, l'oxyde de nickel, l'oxyde de fer ou analogues.

Les oxydes autres que l'alumine peuvent représenter de 0 à 40 % du poids du catalyseur.

Les catalyseurs de l'invention peuvent, en outre, comprendre un ou plusieurs constituants choisis parmi les argiles, silicates, sulfates d'un métal alcalino-terreux ou d'ammonium, les fibres céramiques, les fibres d'amiante.

Ils peuvent également comprendre des additifs pour faciliter la mise en forme et des additifs pour améliorer leurs propriétés mécaniques finales.

A titre d'exemple d'additifs, on peut citer notamment : la cellulose, la carboxymethyl-cellulose, la carboxyéthyl-cellulose, du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

L'alumine utilisée pour le catalyseur selon l'invention peut etre obtenue comme décrit dans FR-A-2 527 197 par traitement dans un milieu aqueux ayant un pH inférieur à 9 d'une poudre d'alumine active obtenue par déshydratation rapide d'hydrargillite dans un courant de gaz chauds, séchage par atomisation, puis calcination selon le procédé décrit dans EP-A-15196.

Elle peut aussi être obtenue de manière avantageuse comme decrit dans FR-A-2 449 650 par traitement d'une poudre d'alumine active présentant une structure mal cristallisée et/ou amorphe dans un milieu aqueux ayant un pH inférieur à 9, une alumine de structure mal cristallisée étant telle que définie dans ce document

L'alumine selon l'invention peut également être obtenue par mélange d'une alumine obtenue selon le procédé decrit dans FR-A-2 449 650 et d'une alumine obtenue selon un autre procédé décrit dans FR-A-2 527 197 consistant en une déshydratation rapide d'hydroxydes ou d'oxyhydroxydes d'aluminium et plus particulièrement d'hydrargillite dans un courant de gaz chauds ; cette déshydratation étant opérée dans n'importe quel appareillage approprié à l'aide d'un courant de gaz chauds, la température d'entrée des gaz dans l'appareillage variant géneralement de 400 à 1200°C environ, le temps de contact de l'hydroxyde ou de l'oxyhydroxyde avec les gaz chauds étant généralement compris entre une fraction de seconde et 4-5 secondes. Ce procédé est decrit plus en détail dans FR-A-1 108 011. Le mélange d'une alumine obtenue par le procédé décrit dans le document FR-A-2 449 650 et d'une alumine obtenue par le procédé décrit dans FR-A-2 527 197 permet, par un réglage simple de la proportion de chacune des alumines ainsi obtenues, d'obtenir une alumine finale présentant un taux de $Na_2O$ souhaité. En effet, une alumine obtenue par calcination rapide d'hydroxydes ou d'oxyhydroxydes d'aluminium conduit à une alumine ayant un taux élevé de $Na_2O$, de l'ordre de 3500 ppm. Après traitement en milieu aqueux à pH inférieur à 9, le taux de $Na_2O$ est considérablement abaissé (moins de 1000 ppm). L'addition de l'alumine préparé selon le second procédé permet alors l'obtention d'une alumine ayant un taux de $Na_2O$ compris entre 1200 ppm et 2700 ppm.

Le catalyseur selon l'invention est ensuite mis sous une forme appropriée éventuellement après imprégnation sur un support généralement réfractaire.

A titre d'exemple, le catalyseur peut être obtenu par malaxage des différents constituants du catalyseur et extrusion de la pâte minérale obtenue, par pastillage, mise en forme sous forme de billes au drageoir tournant ou au tambour, ou tout autre procédé connu d'agglomération d'une poudre contenant de l'alumine et éventuellement d'autres ingrédients choisis parmi ceux mentionnés ci-dessus.

Il peut également s'agir d'alumine éventuellement additionnée des autres ingrédients simplement concassée et ne présentant pas de forme particulière.

Il est toutefois avantageux que l'alumine se présente sous forme de billes d'un diamètre compris entre 1,5 et 10 mm et plus particulièrement 3 et 7 mm.

Les catalyseurs présentant les caractéristiques de l'invention sont hautement efficaces à la fois pour catalyser la réaction de Claus (équation (2)) et les réactions d'hydrolyse de composés organiques du soufre (équations (4), (5) et (6)).

L'invention a donc également pour objet l'utilisation d'un catalyseur tel que décrit precédemment pour traiter des gaz contenant des composés organiques du soufre par mise en oeuvre d'une réaction d'hydrolyse.

L'invention a enfin pour objet des procédés de traitement de gaz contenant des composés soufrés par hydrolyse par passage de ces gaz sur un lit catalytique caractérisé en ce qu'au moins une partie du catalyseur est constituée par un catalyseur tel que décrit précédemment.

L'objet de l'invention est décrit dans le libellé de la revendication indépendante. Les revendications dépendantes concernent des caractéristiques optionelles.

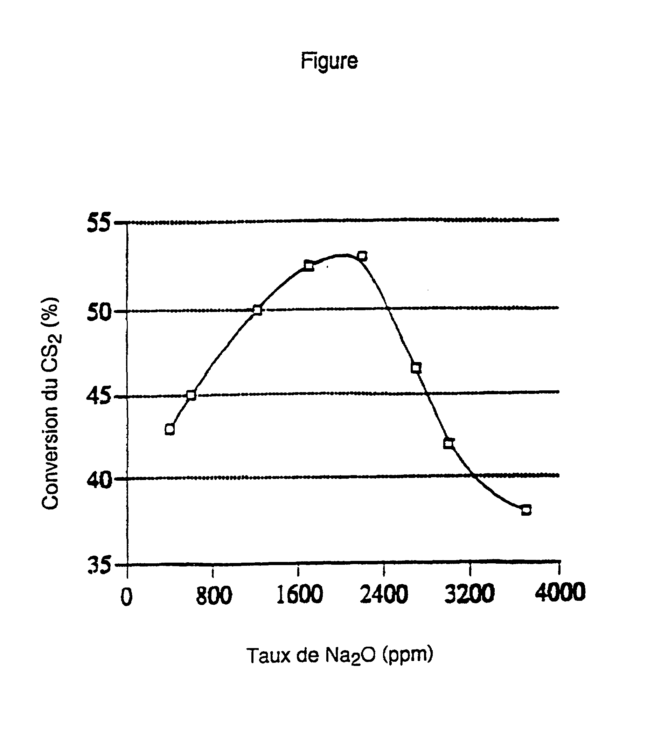

On donnera ci-après des exemples de réalisation d'un catalyseur selon l'invention en se référant à la Figure annexée représentant l'indice de conversion du $CS_2$ en fonction du taux de $Na_2O$ de catalyseurs selon l'invention.

EXEMPLE 1

De l'hydrargillite est déshydratée rapidement à 1000°C, à l'aide d'un courant de gaz chaud pour obtenir un produit A. A contient 3600 ppm de $Na_2O$. Une partie du produit A est traitée en milieu aqueux selon le procédé défini dans EP-A-15196, pour donner un produit B : son taux de $Na_2O$ est alors de 800 ppm en poids. Un mélange 50:50 des alumines A et B est effectué, avant granulation en billes de diamètre inclus entre 3,1 et 6,3 mm. Ces billes présentent alors un taux de sodium de 2200 ppm en poids exprimé en $Na_2O$.

EXEMPLE 2

De la même manière qu'à l'exemple 1, on prépare des catalyseurs présentant les taux de $Na_2O$ égaux à 400, 600, 1200, 1700, 2200, 2700, 3000 et 3700 ppm.

Tous les catalyseurs présentent les caractéristiques physico-chimiques suivantes : surface spécifique : 360 ($\pm$ 10) $m^2/g$, granulométrie des billes : 3,1 - 6,3 mm, volume créé par les pores de diamètre supérieur à 0,1 $\mu$m : 18,5 ml/100 g d'alumine, volume créé par les pores de diamètre supérieur à 1 $\mu$m : 15,5 ml/100 g d'alumine.

Ces catalyseurs sont testés en tant que catalyseur de $1^{er}$ réacteur ($R_1$) et de $2^{ème}$ réacteur ($R_2$) dans un procédé Claus. Ceci signifie que l'unité Claus est composée de deux réacteurs identiques $R_1$ et $R_2$ placés en série et remplis du même catalyseur, le gaz à traiter étant introduit successivement dans $R_1$ puis $R_2$.

En $R_1$, la réaction cruciale, car la plus difficile à mener à bien, est la réaction d'hydrolyse du COS et surtout du $CS_2$. En $R_2$, la température plus faible et la plus faible teneur en $H_2S$ rend la réaction de Claus traditionnelle plus discriminante, du fait des problèmes plus préoccupants liés à la sulfatation de l'alumine.

Les tendances constatées, en hydrolyse du $CS_2$ en $R_1$, et en réaction de Claus en $R_2$, sont toujours retrouvées : si un catalyseur A est plus efficace qu'un catalyseur B en $R_1$, A est aussi plus efficace que B en $R_2$.

Ainsi, ne sont rapportés ici que des résultats de catalyse d'hydrolyse du $CS_2$, en condition $R_1$.

Des tests de catalyse ont donc été conduits en mettant en présence des catalyseurs un gaz à traiter dont la composition volumique est la suivante :

| | |
|---|---|
| $H_2S$ | 6 % |
| $SO_2$ | 4 % |
| $CS_2$ | 1 % |
| $H_2O$ | 30 % |
| $N_2$ | 59 %. |

La mise en contact est effectuée dans un réacteur à 320°C, en fonctionnement isotherme, sous une teneur en oxygène de 10 ppm en volume et avec un temps de contact de 2 s (en conditions normales de température et de pression (CNTP)).

Pour un volume identique de réacteur rempli de catalyseur et un débit d'entrée identique de gaz à traiter, on compare les performances des différents catalyseurs en mesurant l'activité d'hydrolyse et en analysant par chromatographie en phase gazeuse l'$H_2S$, le $SO_2$, le COS et le $S_2$ contenus dans les gaz en sortie du réacteur.

La conversion du $CS_2$ est ainsi mesurée après obtention d'un palier stable pour la teneur en produits de réaction en sortie du réacteur.

Pour chaque test catalytique, on mesure le taux de conversion de $CS_2$ correspondant au catalyseur employé.

Les résultats sont illustrés sur la Figure annexée qui montre que pour la plage de $Na_2O$ comprise entre 1200 et 2700 ppm, le taux de conversion du $CS_2$ est très avantageux.

Ce taux est plus particulièrement avantageux pour la plage préférée selon l'invention comprise entre 1700 et 2200 ppm.

**Revendications**

1. Procédé de réduction de la teneur en $CS_2$ dans un gaz contenant des composés soufrés par passage dudit gaz sur un lit de catalyse constitué de particules de catalyseur, **caractérisé en ce que** lesdites particules de catalyseur comprennent de 60 à 100% en poids par rapport au poids total du catalyseur d'une alumine catalytiquement active contenant du sodium et **en ce que** la teneur en sodium de l'alumine est choisie dans la plage comprise entre 1200 ppm et 2700 ppm de $Na_2O$ en poids.

2. Procédé selon la revendication 1, **caractérisé en ce que** la teneur en sodium de l'alumine est choisie dans la plage comprise entre 1500 ppm et 2500 ppm de $Na_2O$ en poids.

3. Procédé selon l'une des revendications 1 et 2 pour traiter des gaz contenant des composés organiques du soufre par mise en oeuvre d'une réaction d'hydrolyse.

**Patentansprüche**

1. Verfahren zur Verminderung des Gehalts an $CS_2$ in einem schwefelhaltige Verbindungen enthaltenden Gas, unter Durchleiten dieses Gases über ein aus Katalysatorpartikeln bestehendes Katalysebett, **dadurch gekennzeichnet, dass** diese Katalysatorpartikel 60 bis 100 Gew.-% bezogen auf das Gesamtgewicht des Katalysators eines Aluminiumoxids umfassen, das katalytisch aktiv ist und Natrium enthält und dass der Natriumgehalt des Aluminiumoxids gewählt ist in dem Bereich, der zwischen 1200 Gew.-ppm und 2700 Gew.-ppm $Na_2O$ liegt.

2. Verfahren nach Anspruch 1, **dadurch gekennzeichnet, dass** der Natriumgehalt des Aluminiumoxids gewählt ist aus dem zwischen 1500 Gew.-ppm und 2500 Gew.-ppm $Na_2O$ liegenden Bereich.

3. Verfahren nach einem der Ansprüche 1 und 2 zur Behandlung der organische Verbindungen des Schwefels enthaltenden Gase durch Einsatz einer Hydrolyseaktion.

**Claims**

1. A process for reducing the $CS_2$ content in a gas containing sulfur compounds by passing said gas through a catalyst bed constituted by catalyst particles, **characterized in that** said catalyst particles comprise from 60 to 100 % by weight, with respect to the total weight of the catalyst, of a catalytically active alumina containing sodium and that the sodium content of the alumina is selected within the range of between 1200 and 2700 ppm by weight of $Na_2O$.

2. A process according to claim 1 **characterized in that** the sodium content of the alumina is selected within the range of between 1500 and 2500 ppm by weight of $Na_2O$.

3. A process according to one of claims 1 and 2 for the treatment of gases containing sulfur organic compounds via a hydrolysis reaction.

Figure